# EUROPÄISCHE PATENTSCHRIFT

(11) **EP 0 945 246 B1**
(45) Veröffentlichungstag und Bekanntmachung des Hinweises auf die Patenterteilung: **09.04.2003**
(21) Anmeldenummer: 99100918.4
(22) Anmeldetag: 20.01.1999
(51) Int. Cl.: B29C 49/78, B29C 47/92

(54) **Herstellvorrichtung mit Kontrolleinrichtungen für einen Kunststoff-Hohlkörper**
Device with control-equipments for producing a plastainer
Dispositif de fabrication avec unités de contrôle pour corps creux en matière plastique

(30) Priorität: 27.03.1998 DE 19813668
(43) Veröffentlichungstag der Anmeldung: 29.09.1999
(73) Patentinhaber: Ossberger GmbH & Co., 91781 Weissenburg (DE)
(72) Erfinder: Linss, Gerhard, 91781 Weissenburg (DE); Ossberger, Karl-Friedrich, 91781 Weissenburg (DE)
(74) Vertreter: Böhme, Volker, Dipl.-Ing.

(56) Entgegenhaltungen:
- EP-A2- 0 345 474
- EP-A2- 0 710 536
- DE-A1- 3 935 338

## Beschreibung

Die Erfindung betrifft eine Herstellvorrichtung gemäß Oberbegriff des Patentanspruchs 1. Eine Herstellvorrichtung dieser Art ist bekannt (EP 0 345 474 A2).

Die Erfindung befaßt sich auch mit eine Herstellvorrichtung mit Kontrolleinrichtungen für einen Kunststoff-Hohlkörper, die eine Vorform-Blasform-Station aufweist, bei der eine Spritzkolbeneinrichtung plastifizierten Kunststoff unter Druck zu einer Düseneinrichtung fördert, aus der ein Vorformling austritt, an dem eine sich von der Düseneinrichtung wegbewegende Abzugseinrichtung angreift, bei der zwei Blasformhälften zwischen der Düseneinrichtung und der wegbewegten Abzugseinrichtung unter Aufnahme des Vorformlings eine Blasform bildend gegeneinanderbewegbar sind und durch Einblasen mittels der Abzugseinrichtung in der Blasform der Hohlkörper gebildet wird, und bei der ein Rechner mit Steuereinrichtung vorgesehen ist, wobei eine Gewicht-Meßeinrichtung zur Prüfung des Gewichts des Hohlkörpers und weitere Kontroll-Prüfungen der Hohlkörper zugeordnet sind.

Eine Herstellvorrichtung dieser Art, jedoch ohne Gewicht-Meßeinrichtung und weitere Kontroll-Prüfung ist durch die EP-PS 0 535 254 bekannt. Es ist durch die Praxis bekannt, gesondert von dieser Herstellvorrichtung eine Gewicht-Meßeinrichtung vorzusehen und eine Kontroll-Prüfung in folgender Weise vorzunehmen: Der Hohlkörper wird der Länge nach in drei Teile zerschnitten und an den Schnittkanten werden Dickemessungen vorgenommen. Auch werden Übergänge an scharfen Biegungen der Hohlkörper-Kontur bzw. der Schnittkanten sowie zwischen Endbereichen des Hohlkörpers und daran anschließenden Mittenbereichen des Hohlkörpers durch Besichtigung geprüft. Es läßt sich nämlich nicht vermeiden, daß bei der Massenfertigung von Hohlkörpern sich Fehler ergeben, die zu unerwünschten Wanddickenverhältnissen bei den Hohlkörpern führen. Wanddickenfehler führen zu einem vorzeitigen Bruch des einer Beanspruchung unterliegenden Hohlkörpers und liegen in einem zu dicken oder zu dünnen Wanddickenbereich oder in einem Loch in der Wand. Die bekannten Kontrollen werden von einer Person von Hand durchgeführt, was aufwendig ist. Durch das Zerschneiden wird der Hohlkörper unbrauchbar, was einen Verlust darstellt. Da die nicht zerschnittenen Hohlkörper nicht an Schnittkanten geprüft werden, liegt eine unvollständige Prüfung vor. Es ist andererseits in vielen Fällen, z.B. für den Automobilbau, gewünscht, daß jeder einzelne Hohlkörper für sich genauen Kontrollen unterzogen wird.

Eine Aufgabe der Erfindung ist es daher, eine Herstellvorrichtung der zuletzt genannten Art zu schaffen, bei der jeder einzelne Hohlkörper, ohne Verlust, automatisch genau geprüft wird und zwar auch hinsichtlich ordnungsgemäßer Wanddickenverhältnisse. Die Erfindung besteht, diese Aufgabe lösend, darin daß bei der Vorrichtung gemäß Oberbegriff des Patentanspruchs 1 die Kennzeichnenden Merkmale des Patentanspruchs 1 vorgesehen sind.

Bei der erfindungsgemäßen Herstellvorrichtung arbeiten die Kontrolleinrichtungen automatisch und in Bezug auf jeden hergestellten Hohlkörper, ohne daß einer der Hohlkörper durch das Wirken der Kontrolleinrichtungen Verlust wird. Es liegt eine Stückkontrolle vor. Das Kontrollieren erfolgt an der Herstellvorrichtung, indem der Druck des plastifizierten Kunststoffs vor der Düseneinrichtung bei der Spritzkolbeneinrichtung überwacht wird und die Herstellvorrichtung um die Umsetz-Greifeinrichtung ergänzt ist, in deren Wirkungsbereich das Prüfen auf Gewicht und Höhe des Hohlkörpers erfolgt. Der integrierte Einbau ist auch gegeben, weil einerseits die drei Meßeinrichtungen auf den Rechner arbeiten und andererseits der Rechner auf die drei Meßeinrichtungen arbeitet. Die Erfindung beruht auf der Feststellung, daß dann, wenn die drei Messungen ordnungsgemäße Verhältnisse hinsichtlich Druck, Gewicht und Höhe ergeben, jeder hergestellte Hohlkörper in seinen Wanddickenverhältnissen ordnungsgemäß ist und die Funktionen, die er zu erfüllen hat, ordnungsgemäß erfüllt. Ordnungsgemäßer Druck des plastifizierten Kunststoffs und ordnungsgemäße Höhe des Hohlkörpers geben in Verbindung mit einem ordnungsgemäßen Gewicht ordnungsgemäße Wanddickenverhältnisse des Hohlkörpers an.

Die Messungen erfolgen, um zu prüfen, welche Hohlkörper als schlecht dem Ausschuß zuzuführen sind und welche als gut einer Zählung zuzuführen sind. Es erfolgen Gut-/Schlecht-Entscheidungen. Nur wenn ein Hohlkörper bei der Prüfung des Drucks, bei der Prüfung des abgeschnittenen Bodenteils, bei der Prüfung des Gewichts und bei der Prüfung der Höhe für ordnungsgemäß befunden wird, wird er als gut einer Zähleinrichtung zugeführt.

Der Meßkolben geht zur Höhen-Messung um eine vorgegebene Meßstrecke abwärts und drückt dabei den Hohlkörper je nach dessen Höhe mehr oder weniger umfangreich zusammen. Die dazu erforderliche und in dem System steckende Kraft ist ein Maß für die Höhe des Hohlkörpers. Diese Meßeinrichtung ist einfacher zu verwirklichen als eine Meßeinrichtung, bei der die Höhe des Hohlkörpers unmittelbar abgetastet wird.

Es ist möglich, unmittelbar den Druck des plastifizierten Kunststoffs auf dessen Weg vom Spritzkolben zur Düseneinrichtung zu messen. Besonders zweckmäßig und vorteilhaft ist es jedoch, wenn die Spritzkolbeneinrichtung eine betätigende Hydraulik umfaßt und die Druck-Meßeinrichtung ein den Hydraulikdruck der Hydraulik messendes Druckmeßgerät umfaßt. Diese mittelbare Messung des Drucks des plastifizierten Kunststoffs gibt ausreichend Auskunft über die Konsistenz des plastifizierten Kunststoffs und läßt sich apparativ einfach verwirklichen.

In vielen Fällen wird der Hohlkörper mit einem Endbereich, z.B. Boden, erzeugt, der für die spätere Verwendung des Hohlkörpers abgeschnitten wird. Es ist möglich, die Druck- und Höhenmessung an dem Hohlkörper mit Endbereich vorzunehmen. Besonders zweckmäßig und vorteilhaft ist es jedoch, wenn im Wirkungsbereich der Umsetz-Greifeinrichtung zwischen der Vorform-Blasform-Station und der Gewicht-Meßeinrichtung und/oder der Höhen-Meßeinrichtung eine Abschneideeinrichtung zum Abschneiden eines Endbereichs des Hohlkörpers angeordnet ist. Dies verbessert die Meßergebnisse, da im Endbereich ein Fehler vorliegen kann.

Besonders zweckmäßig und vorteilhaft ist es, wenn der Abschneideeinrichtung ein Sensor für erfolgtes Abschneiden zugeordnet ist. Auf diese Weise gelangen nur ordnungsgemäß beschnittene Hohlkörper zu der Gewicht-Meßeinrichtung und zu der Höhen-Meßeinrichtung.

Das Kraftmeßgerät sitzt z.B. im Antriebsgestänge des Meßkolbens oder in einer gesonderten Abstützung des Hohlkörpers. Besonders zweckmäßig und vorteilhaft ist es, wenn der Zusammendrückung-Meßkolben der Gewicht-Meßeinrichtung zugeordnet ist und diese als Kraftmeßgerät verwendet wird. Es entfällt eine Umsetzung des Hohlkörpers zwischen der Höhenmessung und der Gewichtmessung und die Gewicht-Meßeinrichtung wird für zwei Funktionen genutzt.

Die erfindungsgemäße Herstellvorrichtung läßt sich zur Herstellung verschieden gestalteter Hohlkörper nutzen. Besonders zweckmäßig und vorteilhaft ist die Anwendung der erfindungsgemäßen Herstellvorrichtung zur Herstellung eines Faltenbalg-Hohlkörpers, da bei dem Faltenbalg die Möglichkeit von Störungen der Wanddickenverhältnisse besonders ausgeprägt gegeben ist und Störungen der Wanddickenverhältnisse besonders unerwünscht sind. Der Faltenbalg weist ausgeprägte Falten auf, die durch ausgeprägte Einschnürungen voneinander getrennt sind. Der Faltenbalg weist auch zwei Endstücke auf, deren inneren Abmessungen hochgenau erzeugt sind und die durch Spritzgießen erzeugt sind. Der Faltenbalg stellt z.B. die Achsmanschette eines Kraftfahrzeugs dar.

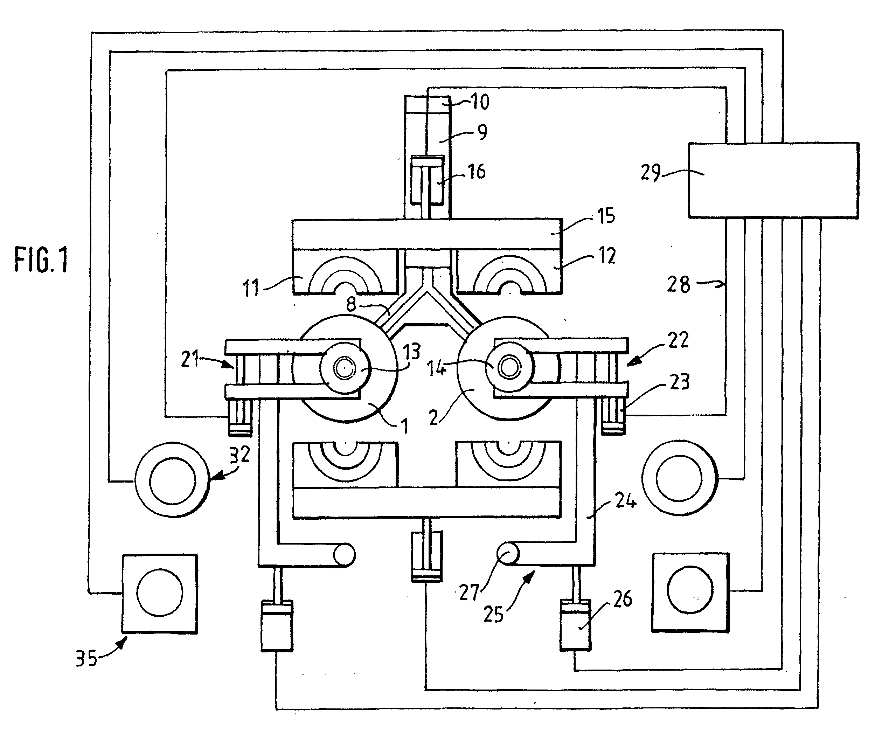

In der Zeichnung ist eine bevorzugte Ausführungsform der Erfindung dargestellt und zeigt
- Fig. 1: schematisch eine Draufsicht auf einen Teil einer Herstellvorrichtung mit Kontrolleinrichtungen für einen Kunststoff-Hohlkörper,
- Fig. 2: schematisch eine Seitenansicht der Herstellvorrichtung gemäß Fig. 1 und
- Fig. 3: ein Flußschema der Kontrollmaßnahmen bei der Herstellvorrichtung gemäß Fig. 1.

Die Herstellvorrichtung gemäß Zeichnung weist an einem gemeinsamen, nicht gezeigten Traggestell zwei Düseneinrichtungen 1, 2 auf, bei denen in einem Spritzkopf ein Düsenkegel mittels eines Antriebs 3, 4 verstellbar ist, wobei jeder Düseneinrichtung ein eigener Antrieb zugeordnet ist. Jeder Düseneinrichtung 1, 2 ist eine Spritzkolbeneinrichtung 5, 6 zugeordnet und die beiden Spritzkolbeneinrichtungen sind über ein Balkenmittel 7 verbunden, an dem ein Antrieb 31 angreift. Jeder Spritzkolbeneinrichtung 5, 6 wird über eine Rohrleitung 8 von einer gemeinsamen Plastifizierungseinrichtung 9 plastifizierter Kunststoff zugeführt, wobei die Plastifizierungseinrichtung einen Antrieb 10 umfaßt. Mit jeder Düseneinrichtung 1, 2 läßt sich zwischen zwei Blasformhälften 11, 12 je ein Hohlkörper 13, 14 erzeugen; es sind je zwei nebeneinander angeordnete Blasformhälften 11, 12 durch ein Balkenmittel verbunden, an dem ein Antrieb 16 angreift.

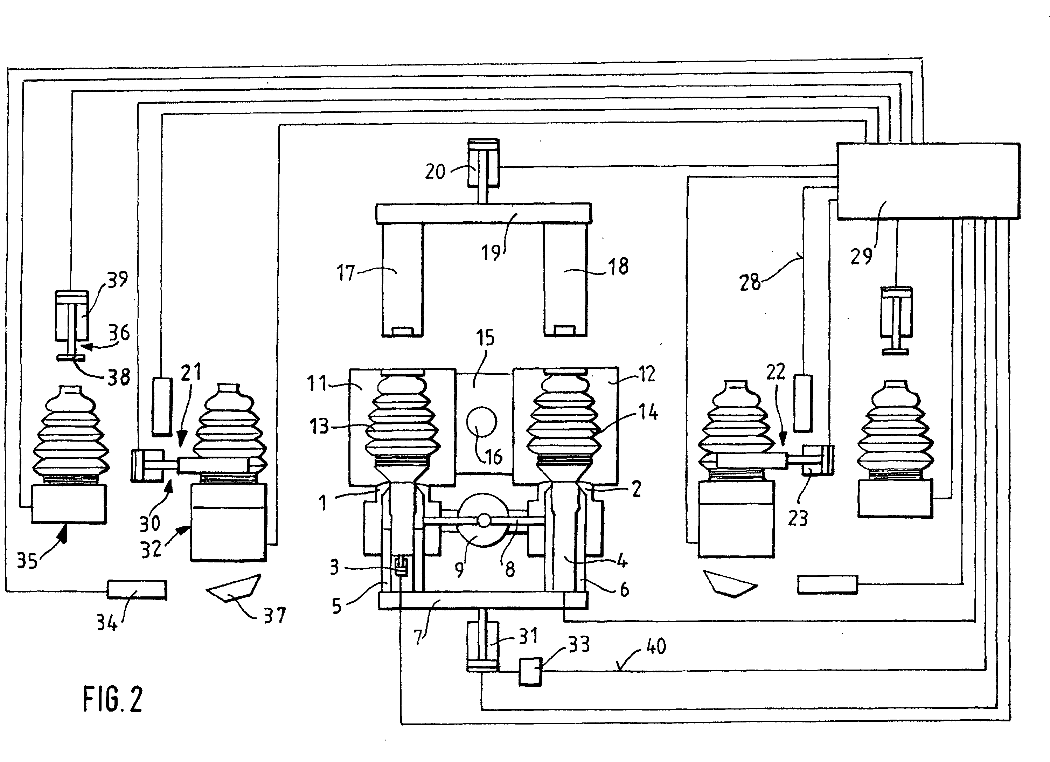

Es sind im oberen Bereich der Herstellvorrichtung zwei Abzugseinrichtungen 17, 18 vorgesehen, die auch Blasfunktion ausüben und die über ein Balkenmittel 19 verbunden sind, an dem ein Antrieb 20 angreift. Es sind zwei Greifeinrichtungen 21, 22 vorgesehen, die jeweils einen Betätigungsantrieb 23 umfassen. Jede Greifeinrichtung 21, 22 ist an einem Winkelhebel 24 eines Schwenkgestänges 25 angebracht und an jedem Winkelhebel 24 greift ein Antrieb 26 an. Der Winkelhebel 24 ist um eine Drehachse 27 drehbar und bringt den Hohlkörper 13 bzw. 14 aus der Position über der Düseneinrichtung 1, 2 in eine in Fig. 2 angedeutete Position 30. Jeder Antrieb ist über eine Steuerleitung 28 mit einem Steuergerät bzw. Rechner 29 verbunden. Die Herstellvorrichtung umfaßt auch eine Abschneideeinrichtung 32, eine Druck-Meßeinrichtung 33, einen Sensor 34 für Abschneiden, eine Gewicht-Meßeinrichtung 35 und eine Höhen-Meßeinrichtung 36.

Die Druck-Meßeinrichtung 33 ist gemäß Fig. 2 ein Druckmeßgerät an der Hydraulik des Antriebs 31 der Spritzkolbeneinrichtungen 5, 6. Die Druck-Meßeinrichtung 33 gibt also für jedes Werkstück bzw. jeden Hohlkörper den Druck des plastifizierten Kunststoffs bei der Zufuhr zur Düseneinrichtung 1, 2 an. Die Greifeinrichtung 21, 22 bringt den Hohlkörper 13, 14 zur Abschneideeinrichtung 32, die einen Endbereich 37 abschneidet. Der Sensor 34 überwacht das Anfallen des abgeschnittenen Endbereichs 37. Die Greifeinrichtung 21, 22 gibt den beschnittenen Hohlkörper weiter an die Gewicht-Meßeinrichtung 35, die das Gewicht des Hohlkörpers feststellt. Sodann wird die Höhen-Meßeinrichtung 36 wirksam, indem ein Meßkolben 38 mittels eines Antriebs 39 von oben gegen den Hohlkörper gefahren wird und diesen gegen die Gewicht-Meßeinrichtung 35 drückt. Die drei Meßeinrichtungen 33, 35, 36 und der Sensor 34 sind über Informationsleitungen 40 mit dem Rechner 29 verbunden.

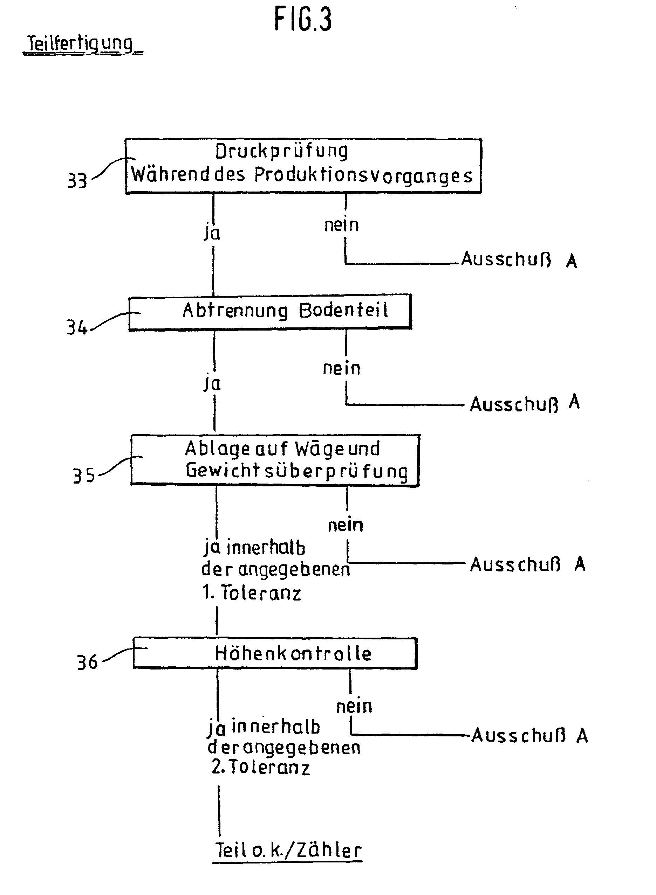

Das Flußschema gemäß Fig. 3 verdeutlicht die Kontrollmaßnahmen der Herstellvorrichtung. Unbrauchbare Hohlkörper werden einem Ausschuß A zugeführt. Liegt laut der Druck-Meßeinrichtung 33 der Druck nicht in einem Sollwertbereich, scheidet der Hohlkörper aus. Läßt sich mittels des Sensors 34 die Abtrennung des Endbereichs 37 nicht feststellen, scheidet der Hohlkörper aus. Liegt laut der Gewicht-Meßeinrichtung 35 das Gewicht nicht in einem Sollbereich, scheidet der Hohlkörper aus. Liegt laut der Höhen-Meßeinrichtung 36 die Höhe nicht in einem Sollbereich, scheidet der Hohlkörper aus. Die nicht ausgeschiedenen, als gut geprüften Hohlkörper werden gezählt.

## Patentansprüche

1. Herstellvorrichtung für einen Kunststoff-Hohlkörper (13, 14), die Mittel zum Vorformen und Mittel zum Blasformen aufweist,
bei der eine Spritzkolbeneinrichtung (5, 6) plastifizierten Kunststoff unter Druck zu einer Düseneinrichtung (1, 2) fördert, aus der ein Vorformling austritt,
bei-der zwei Blasformhälften (11, 12) unter Aufnahme des Vorformlings eine Blasform bildend gegeneinander bewegbar sind und durch Einblasen in die Blasform der Hohlkörper gebildet wird,
bei der ein Rechner (29) mit Steuereinrichtung vorgesehen ist,
bei der als Kontrolleinrichtungen für Gut-/Schlecht-Entscheidungen vorgesehen sind,
eine Gewichts-Meßeinrichtung (35) zur Prüfung des Gewichts des Hohlkörpers (13, 14),
eine Abstands-Meßeinrichtung (36) zur Prüfung eines Abstands an dem Hohlkörper und
eine weitere Meßeinrichtung zur Prüfung eines weiteren Wertes,
bei der die Gewichts-Meßeinrichtung, die Abstands-Meßeinrichtung und die weitere Meßeinrichtung (33) an den Rechner (29) über Informationsleitungen (40) angeschlossen sind,
bei der die Kontrolleinrichtungen automatisch und in Bezug auf jeden hergestellten Hohlkörper (13, 14) arbeitend sind, wobei der mit der Steuereinrichtung versehene Rechner (29) über Steuerleitungen an die Messeinrichtungen (33, 35, 36) angeschlossen ist,
bei der Fördermittel zum Verbringen des Hohlkörpers von dem Mittel zum Blasformen zu der Gewichts-Meßeinrichtung (35) sowie der Abstands-Meßeinrichtung (36) geeignet ausgebildet sind, und
bei der die Fördermittel als Umsetz-Greifeinrichtung (21, 22) zum Erfassen des Hohlkörpers an dem Mittel zum Blasformen und zum Abgeben des Hohlkörpers an der Gewichts-Meßeinrichtung sowie der Abstands-Meßeinrichtung ausgebildet sind, wobei die Meßeinrichtungen (33, 35, 36) integriert eingebaut sind,
**dadurch gekennzeichnet,**
**daß** die Mittel zum Vorformen und die Mittel zum Blasformen als Vorform-Blasform-Station ausgebildet sind, bei der an dem austretenden Vorformling eine sich von der Düseneinrichtung (1, 2) wegbewegende Abzugseinrichtung (17, 18) angreift, mittels der das Einblasen in den Vorformling erfolgt, wobei die Blasformhälften (11, 12) zwischen der Düseneinrichtung (1, 2) und der wegbewegten Abzugseinrichtung (17, 18) angeordnet sind,
**daß** die Abstands-Meßeinrichtung als Höhen-Meßeinrichtung (36) zur Prüfung der Höhe des Hohlkörpers (13, 14) und die weitere als Kontrolleinrichtung für Gut-/Schlecht-Entscheidungen dienende Meßeinrichtung als Druck-Meßeinrichtung (33) zur Prüfung des Drucks des plastifizierten Kunststoffes ausgebildet ist, und
**daß** der Hohlkörper (13, 14) in Richtung der Höhe elastisch zusammendrückbar ist und bei der Höhen-Meßeinrichtung (36) ein Meßkolben (38) um eine vorgegebene Strecke gegen den Hohlkörper unter Zusammendrückung des Hohlkörpers fahrbar ist und ein der der Zusammendrückung entsprechenden Kraft zugeordnetes Kraftmeßgerät einen der Höhe entsprechenden Wert anzeigt.

2. Herstellvorrichtung nach Anspruch 1, **dadurch gekennzeichnet, daß** die Spritzkolbeneinrichtung (5, 6) eine betätigende Hydraulik (31) umfaßt und die Druck-Meßeinrichtung (33) ein den Hydraulikdruck der Hydraulik (31) messendes Druckmeßgerät umfaßt.

3. Herstellvorrichtung nach Anspruch 1 oder 2, **dadurch gekennzeichnet, daß** im Wirkungsbereich der Umsetz-Greifeinrichtung (21, 22) zwischen der Vorform-Blasform-Station und der Gewicht-Meßeinrichtung (35) und/oder der Höhen-Meßeinrichtung (36) eine Abschneideeinrichtung (32) zum Abschneiden eines Endbereichs (37) des Hohlkörpers (13, 14) angeordnet ist.

4. Herstellvorrichtung nach Anspruch 3, **dadurch gekennzeichnet, daß** der Abschneideeinrichtung (32) ein Sensor (34) für erfolgtes Abschneiden zugeordnet ist.

5. Herstellvorrichtung nach einem der vorhergehenden Ansprüche, **dadurch gekennzeichnet, daß** der Zusammendrückbar-Meßkolben (38) der Gewicht-Meßeinrichtung (35) zugeordnet ist und diese als Kraftmeßgerät verwendet wird.

6. Anwendung der Herstellvorrichtung gemäß einem der vorhergehenden Ansprüche zum Herstellen eines Faltenbalg-Hohlkörpers (13, 14).

## Claims

1. A manufacturing device for a plastics hollow body (13, 14), comprising preforming means and blow-moulding means, wherein an injection-plunger arrangement (5, 6) delivers plasticised plastics under pressure to a nozzle arrangement (1, 2), from which a parison issues, wherein two blow-mould halves (11, 12) are movable towards one another to form a blow mould for receiving the parison, and the hollow body is formed by insufflation into the blow mould, wherein a computer (29) with a control arrangement is provided, wherein a weight-measuring arrangement (35) for checking the weight of the hollow body (13, 14), a distance-measuring arrangement (36) for checking a distance on the hollow body and a further measuring arrangement for checking a further value are provided as monitoring arrangements for good/bad decisions, wherein the weight-measuring arrangement, the distance-measuring arrangement and the further measuring arrangement (33) are connected to the computer (29) via information lines (40), wherein the monitoring arrangements operate automatically and with reference to each hollow body (13, 14) manufactured, the computer (29) provided with the control arrangement being connected to the measuring arrangements (33, 35, 36) via control lines, wherein conveying means for moving the hollow body from the blow-moulding means to the weight-measuring arrangement (35) and the distance-measuring arrangement (36) are suitably formed, and wherein the conveying means are formed as a transfer/ gripping arrangement (21, 22) for picking up the hollow body from the blow-moulding means and for transferring the hollow body to the weight-measuring arrangement and the distance-measuring arrangement, the measuring arrangements (33, 35, 36) being installed in an integrated manner,
**characterised in that** the preforming means and the blow-moulding means are formed as a preforming/blow-moulding station, wherein the issuing parison is engaged by a draw-off arrangement (17, 18) which withdraws from the nozzle arrangement (1, 2) and by means of which insufflation into the parison is carried out, the blow-mould halves (11, 12) being arranged between the nozzle arrangement (1, 2) and the withdrawn draw-off arrangement (17, 18), **in that** the distance-measuring arrangement is formed as a height-measuring arrangement (36) for checking the height of the hollow body (13, 14), and the further measuring arrangement serving as a monitoring arrangement for good/bad decisions is formed as a pressure-measuring arrangement (33) for checking the pressure of the plasticised plastics, and **in that** the hollow body (13, 14) is resiliently compressible in the vertical direction, a measuring piston (38) of the height-measuring arrangement (36) is movable through a predetermined distance towards the hollow body with compression of the hollow body, and a force-measuring instrument associated with the force corresponding to the compression indicates a value corresponding to the height.

2. A manufacturing device according to claim 1, **characterised in that** the injection-plunger arrangement (5, 6) comprises an actuating hydraulic system (31), and the pressure-measuring arrangement (33) comprises a pressure-measuring instrument measuring the hydraulic pressure of the hydraulic system (31).

3. A manufacturing device according to claim 1 or 2, **characterised in that** a cut-off arrangement (32) for cutting off an end region (37) of the hollow body (13, 14) is arranged in the region of effect of the transfer/gripping arrangement (21, 22) between the preforming/blow-moulding station and the weight-measuring arrangement (35) and/or the height-measuring arrangement (36).

4. A manufacturing device according to claim 3, **characterised in that** a sensor (34) for detecting when cutting-off has taken place is associated with the cut-off arrangement (32).

5. A manufacturing device according to any one of the preceding claims, **characterised in that** the compression-measuring piston (38) is associated with the weight-measuring arrangement (35), which is used as a force-measuring instrument.

6. Use of the manufacturing device according to any one of the preceding claims for manufacturing a bellows hollow body (13, 14).

## Revendications

1. Dispositif de fabrication d'un corps creux en matière synthétique (13, 14) qui présente des moyens pour la déformation préalable et des moyens pour le formage par soufflage, où une installation à piston d'injection (5,6) transporte de la matière synthétique plastifiée sous pression à une installation à buse (1,2) de laquelle sort une paraison, ou deux moitiés de moule de soufflage (11, 12), formant un moule de soufflage en reçevant la paraison, sont déplaçables l'une contre l'autre et, par soufflage dans le moule de soufflage, le corps creux est formé,
où un calculateur (29) avec une installation de commande est prévu, où des installation de contrôle pour des décisions bonne/mauvaise sont prévues, une installation de mesure de poids (35) pour vérifier le poids du corps creux (13, 14),
une installation de mesure d'espacement (36) pour examiner un espacement au corps creux et une autre installation de mesure pour examiner une autre valeur, où l'installation de mesure de poids, l'installation de mesure d'espacement et l'autre installation de mesure (33) sont raccordées au calculateur (29) par des lignes d'information (40)
où les installations de contrôle fonctionnent d'une manière automatique et relativement à chaque corps creux fabriqué (13, 14), où le calculateur (29) pourvu de l'installation de commande est raccordé par des lignes de commande aux installations de mesure (33, 35, 36),
où des moyens de convoyage sont réalisés d'une manière appropriée pour amener le corps creux du moyen pour le formage par soufflage à l'installation de mesure de poids (35) et à l'installation de mesure d'espacement (36) et
où les moyens de convoyage sont réalisés comme installation de transposition à griffes (21, 22) pour saisir le grand creux au moyen pour le formage par soufflage et pour transmettre le corps creux à l'installation de mesure de poids ainsi qu'à l'installation de mesure d'écart, où les installations de mesure (33, 35, 36) sont installées d'une manière intégrée,
**caractérisé en ce que** les moyens pour le formage préalable et les moyens pour le formage par soufflage sont réalisés comme poste de formage préalable et de formage par soufflage, où à la paraison sortante, s'applique une installation d'aspiration (17, 18) s'éloignant de l'installation à buse (1, 2) au moyen de laquelle a lieu le soufflage dans la paraison, où les moitiés de moule de soufflage (11, 12) sont disposées entre l'installation à buse (1, 2) et l'installation d'aspiration éloignée (17, 18),
**en ce que** l'installation de mesure d'espacement est réalisée comme installation de mesure de hauteur (36) pour examiner la hauteur du corps creux (13, 14), et l'autre installation de mesure servant d'installation de contrôle pour des décisions bonne/mauvaise est réalisée comme installation de mesure de pression (33) pour vérifier la pression de la matière synthétique plastifiée et
**en ce que** le corps creux (13, 14) peut être comprimé élastiquement dans la direction de la hauteur et que dans le cas de l'installation de mesure de hauteur (36), un piston de mesure (38) peut être déplacé selon un trajet prédéterminé contre le corps creux en comprimant le corps creux et qu'un appareil de mesure de force associé à la force correspondant à la compression indique une valeur correspondant à la hauteur.

2. Dispositif de fabrication selon la revendication 1, **caractérisé en ce que** l'installation à piston d'injection (5, 6) comporte une hydraulique d'actionnement (31) et **en ce que** l'installation de mesure de pression (33) comporte un appareil de mesure de pression mesurant la pression hydraulique de l'hydraulique (31).

3. Dispositif de fabrication selon la revendication 1 ou 2, **caractérisé en ce que** dans la zone d'action de l'installation de transposition à griffes (21, 22) entre le poste de formage préalable et de soufflage par formage et l'installation de mesure de poids (35) et/ou l'installation de mesure de hauteur (36), une installation de coupe (32) est disposée pour couper une zone d'extrémité (37) du corps creux (13, 14).

4. Dispositif de fabrication selon la revendication 3, **caractérisé en ce qu'**il est associé à l'installation de coupe (32) un capteur (34) pour une coupe effectuée.

5. Dispositif de fabrication selon l'une des revendications précédentes, **caractérisé en ce que** le piston de mesure de compression (38) est associé a l'installation de mesure de poids (35) et que celle-ci est utilisée comme appareil de mesure de force.

6. Utilisation du dispositif de fabrication selon l'une des revendications précédentes pour la fabrication d'un corps creux de soufflet (13, 14).
